# EUROPEAN PATENT SPECIFICATION

(11) **EP 3 133 116 B1**
(45) Date of publication and mention of the grant of the patent: **15.09.2021**
(21) Application number: 15779634.3
(22) Date of filing: 17.04.2015
(51) Int. Cl.: C03C 25/32, C03C 25/26, C03C 25/34, C03C 25/14, C08L 5/00, C08J 3/24, C08J 5/04, C08K 5/16, C09J 105/00, C09J 189/00, C08L 89/00

(54) **AQUEOUS THERMOSETTING BINDER COMPOSITION AND METHOD FOR BINDING FIBROUS MATERIALS BY USING SAME**
WÄSSRIGE WÄRMEHÄRTENDE BINDERZUSAMMENSETZUNG UND VERFAHREN ZUM BINDEN VON FASERMATERIALIEN DAMIT
COMPOSITION DE LIANT COMPOSITION AQUEUSE DE LIANT THERMODURCISSABLE, ET PROCÉDÉ DE LIAISON DE MATÉRIAUX FIBREUX L'UTILISANTTHERMODURCISSABLE ET PROCÉDÉ POUR LIER DES MATÉRIAUX FIBREUX EN UTILISANT CELUI-CI

(30) Priority: 18.04.2014 KR 20140046713
(43) Date of publication of application: 22.02.2017
(73) Proprietor: Kcc Corporation, Seoul 137-703 (KR)
(72) Inventor: HONG, Seung Min, Hwaseong-si Gyeonggi-do 445-723 (KR); KIM, Yong Joo, Yongin-si Gyeonggi-do 448-130 (KR); JEONG, Young Gi, Anyang-si Gyeonggi-do 430-826 (KR)
(74) Representative: Denjean, Eric
(86) International application number: PCT/KR2015/003874
(87) International publication number: WO 2015/160216

(56) References cited:
- EP-A1- 1 550 469
- EP-A1- 2 386 394
- EP-A1- 2 386 605
- WO-A2-2008/127936
- KR-A- 20140 017 672
- US-A1- 2010 087 571
- US-A1- 2014 076 197
- US-B2- 8 232 334
- None

## Description

### [Technical Field]

The present invention relates to an aqueous binder composition and a method for binding fibrous materials by using the same, and more specifically, relates to an aqueous binder composition and a method for binding fibrous materials by using the same comprising one or more reducing sugars, one or more amino acids, and one or more polyglycidyl ether compounds of polyhydric alcohol, with the further limitations described in claims 1 and 8. The present invention provides the same or better physical properties with lower price compared to traditional phenol formaldehyde resin (PFR), does not include or release toxic materials such as formaldehyde or phenol, and may decrease intoxication which is a weak point of traditional PFR during manufacturing and remarkably enhances the mechanical properties such as water resistance, tensile strength and hardness of the manufactured product.

### [Background Art]

PFR has been widely used as a binder for adhesion of fibrous materials, such as glass wool and rock wool, since it is inexpensive but has outstanding physical properties. However, PFR releases formaldehyde, a carcinogenic agent, not only during the manufacturing process but even after application, and phenol is also a toxic material which may cause harmful effects as the unreacted reacting material is continuously exposed to the external environment.

In an improvement of this, Korean Registered Patent No. 240044 discloses adhesives mainly consisting of pullulan and sugars derived from natural sources and molded materials that contain the same. Still, adhesives disclosed in this patent cannot be facilitated as a binder since the degree of cure is too poor to obtain sufficient physical properties, such as water resistance.

US Laid-open Patent Publication No. 2012-0133073 discloses the use of melanoidin and polyester polymer, which is formed by molasses and polybasic acid at a high temperature. However, due to the inherent feature of molasses itself, its weak point is that the type and content of the components cannot be managed uniformly.

Korean Laid-open Patent Publication No. 1999-0037115 discloses a binder composition wherein curing of bake-esterification using polysaccharide and multifunctional compounds with carboxylic group is performed. However, it has problems since sufficiently high temperature and curing time are necessary, as the reaction rate of ester condensation reaction between carboxylic acid and hydroxyl group of polysaccharide is too slow.

Korean Laid-open Patent Publication No. 2008-0049012 discloses adhesive which includes Maillard reactants such as neutralized multifunctional acid compound and reducing sugar. However, weak points exist, since sufficient hardness is not easily obtained after curing reaction at a high temperature, and when immersed in water, brown compounds which are water-soluble with low molecular weight are eluted. Moreover, when ammonia or volatile amine is used as a neutralizer, problems related to loss of resources or air pollution due to the volatilization during the bake-process may occur and amine compounds are mostly derived from petrochemistry wherein limitations lie regarding depletion of natural resources.

US Laid-open Patent Publication No. 2013-0059075 discloses adhesive which is obtained by Maillard reaction between reducing sugars and polyamine at a high temperature. However, sustainable production is not possible since polyamine used herein is also mostly based on petrochemistry. Document EP2386605-A1 discloses a method of binding glass fibres with a composition comprising glucose as a reducing sugar and lysine as an amino-acid, which evidently has the function of cross-linking the sugar.

### [Detailed Description]

### [Technical Purpose]

The purpose of the present invention is to provide an aqueous binder composition and a method for binding fibrous materials by using the same with equal or better physical properties with lower price compared to traditional phenol formaldehyde resin (PFR), does not include or release toxic materials such as formaldehyde or phenol, and may decrease intoxication which is a weak point of traditional PFR during manufacturing, remarkably enhances the mechanical properties such as water resistance, tensile strength and hardness of the manufactured product and is free from depletion of resources since main raw materials derived from nature may be used, which allows sustainable productivity.

### [Technical Solution]

Thus, the present invention provides an aqueous heat-curable binder composition; comprising one or more reducing sugars, one or more amino acids, and one or more polyglycidyl ether compounds of polyhydric alcohol, as described in attached claim 1.

In another aspect, the present invention provides a binding method comprising spraying the above aqueous heat-curable binder composition on the fibrous materials; and heat-curing the binder composition, as described in claim 8.

### [Advantageous Effects]

The fibrous material products bound by the binder composition of the present invention feature the same or better physical properties with lower price compared to traditional phenol formaldehyde resin (PFR), do not include or release toxic materials such as formaldehyde or phenol, may decrease intoxication which is a weak point of traditional PFR during manufacturing and remarkably enhance the mechanical properties such as water resistance, tensile strength and hardness of the manufactured product.

### [Mode for Invention]

Hereinafter, the present invention will be described in more detail.

The binder composition of the present invention includes one or more reducing sugars. The reducing sugar of the present invention refers to aldose or ketose saccharides which have aldehyde or which may have aldehyde structure by isomerization. More specifically, monosaccharide or disaccharide such as glucose, maltose, fructose, galactose, lactose, cellobiose, gentiobiose, and rutinose may be used individually or in combination, but the reducing sugar is not limited thereto.

The amount of reducing sugar comprised in the binder composition of the present invention is 40∼95 parts by weight, or more preferably 60∼90 parts by weight, or even more preferably 70∼90 parts by weight based on a total of 100 parts by weight of reducing sugar and amino acid. When the content of reducing sugar in the binder composition is less than 40 parts by weight based on a total of 100 parts by weight of reducing sugar and amino acid, the hardness of the cured product formed by the binder composition may decline, and when the content of reducing sugar is more than 95 parts by weight, the stability and degree of cure of the cured product may decline.

The binder composition of the present invention comprises one or more amino acids. According to the present invention, amino acid is a compound having one or more amino groups and one or more carboxyl groups-specifically, glycine, alanine, valine, leucine, isoleucine, threonine, serine, cysteine, methionine, aspartic acid, asparagine, glutamic acid, diodine tyrosine, lysine, arginine, histidine, phenylalanine, tyrosine, tryptophan, proline, oxyproline and glutamine may be used individually or in combination-but is not limited thereto.

The amount of amino acid comprised in the present invention is 5∼60 parts by weight, or more preferably 10∼40 parts by weight, or even more preferably 10∼30 parts by weight based on total 100 parts by weight of reducing sugar and amino acid. When the content of amino acid in binder composition is less than 5 parts by weight based on total 100 parts by weight of reducing sugar and amino acid, the stability and degree of cure of the cured product may decline, and when it is more than 60 parts by weight, the hardness of the cured product formed by binder composition may decline.

According to one embodiment of the present invention, in order to increase the solubility of amino acid to water, amino acid wherein a part or the entire (for example, the amino group included in the amino acid is 20∼100% equivalent, preferably 30∼100% equivalent) amino group is neutralized by acid is preferably used. The examples of acids used to neutralize amino acid are sulfuric acid, phosphoric acid, carboxylic acid, organic sulfonic acid, and any forms of acid compounds may be used, such as unimolecular, dimer, trimer, oligomer, or polymer. In certain cases, the amino acid may be neutralized by amine compounds or ammonia. Preferably, acid compound wherein the boiling point is higher than 300°C (for example, 300∼500°C) under room temperature and normal pressure condition (25°C, 1 atm) may be used.

The reducing sugar and amino acid which is the main component of the present invention is obtained by hydrolysis or a fermentation process from starch or molasses derived from a plant. Polyglycidyl ether compound of polyhydric alcohol which will be described below may be obtained by reacting glycerin, sorbitol, etc.-which are formed during processing of the vegetable oils-with epichlorohydrin (which may be induced from glycerin). Therefore, depletion of natural resources would not be a problem, wherein the amount of carbon dioxide may be minimized during manufacturing or discarding. Furthermore, during the product manufacturing process and in the final product, toxic materials such as phenol and formaldehyde are neither included nor formed, which makes it ecofriendly.

The binder composition of the present invention comprises one or more polyglycidyl ether compounds of polyhydric alcohol which has an oxidation number of 2 or higher (for example, divalence to heptavalence)-in other words, the compound which has two or more hydroxyl groups. The number of glycidyl groups comprised in the polyglycidyl ether compound of the polyhydric alcohol is preferably 2∼7, or more preferably 2∼5, or most preferably 2∼3. As the binder composition of the present invention is in the form of solution or aqueous dispersion before being applied, it is preferable that the water tolerance (water tolerance in the present invention refers to weight % of water to epoxy compound for maintaining a homogenous solution without phase separation when water is dissolved to the epoxy compound in room temperature, normal pressure) of the aforementioned polyglycidyl ether compound be high in order to obtain colloidal stability of binder solution before spraying. The water tolerance of polyglycidyl ether compound of polyhydric alcohol will be fine as long as it is specifically more than 25% by weight. When the water tolerance of polyglycidyl ether compound of polyhydric alcohol is too low, polyglycidyl ether compound of polyhydric alcohol will not be dissolved well when preparing binder solution, which may lead to insufficient curing ability.

Polyglycidyl ether compound of the polyhydric alcohol used herein may be prepared from petrochemical-based resources or natural resources, and it is preferred to use the compound prepared from natural resources allowing it to be produced sustainably, in terms of protecting earth's environment. For example, epichlorohydrin prepared from glycerin derived from vegetable oils, and sorbitol polyglycidylether or glycerin polyglycidylether prepared from glycerin, sorbitol derived from natural resources may be used preferably as well.

The polyglycidyl ether compound of the polyhydric alcohol usable in the present invention may be one or more of di-, tri- or polyglycidyl ether compounds of diol, triol or polyol compound which has two or more hydroxyl groups. As for a specific example, one or more from the group consisting of glycerin polyglycidyl ether, ethylene glycol diglycidyl ether, diethylene glycol diglycidyl ether, polyethylene glycol diglycidylether, polypropylene glycol diglycidyl ether, trimethylolpropane polyglycidyl ether and sorbitol polyglycidyl ether may be chosen, but the kinds of polyglycidyl ether compound of polyhydric alcohol which may be used in the present invention are not limited hereto. In other words, various polyhydric alcohols and glycidyl compounds may be reacted to form polyglycidyl ether compound of polyhydric alcohol, and all these may be comprised in the scope of the present invention.

The amount of polyglycidyl ether compound of the polyhydric alcohol comprised in the binder composition of the present invention is, based on a total of 100 parts by weight of reducing sugar and amino acid, is 0.1∼10 parts by weight, or more preferably 0.1∼5 parts by weight, or even more preferably 0.1∼3 parts by weight. When the amount of polyglycidyl ether compound of polyhydric alcohol comprised in the binder composition of the present invention is less than 0.1 parts by weight based on a total of 100 parts by weight of reducing sugar and amino acid, the physical properties such as water resistance may decline due to insufficient curing, and when it is more than 10 parts by weight, the adhesive cured product may be easily broken or unreacted epoxy compound may remain, which can also affect the physical properties of the product in an undesirable way.

Preferably, the binder composition of the present invention may additionally comprise acid compound wherein its boiling point is higher than 300°C (for example, 300∼500°C) under room temperature and normal pressure condition (25°C, 1 atm). These acid compounds with high boiling points increase the solubility of amino acid in water, and may be used to increase the curing rate during the baking process after application in the fibrous assembly. In order to inhibit volatilization through curing reaction, it is preferable that the boiling point under room temperature and normal pressure condition be 300°C or higher. Sulfuric acid, phosphoric acid, carboxylic acid and organic sulfonic acid are concrete examples of acid compounds with high boiling points and any form of acid compounds may be used, such as unimolecular, dimer, trimer, oligomer, or polymer. In some cases, such acid compounds may be used in forms neutralized by amine compounds or ammonia.

In a case wherein the binder composition of the present invention comprises an acid compound with high boiling point, it amounts to, based on a total of 100 parts by weight of reducing sugar and amino acid, preferably 0.1∼10 parts by weight, more preferably 0.1∼5 parts by weight, even more preferably 0.1∼3 parts by weight. When the content of acid compound in the binder composition is less than 0.1 parts by weight based on a total of 100 parts by weight of reducing sugar and amino acid, sufficient curing may not occur which leads to inferior physical properties of the cured product, and when it is more than 10 parts by weight, fragile cured products may be formed.

The binder composition of the present invention may further comprise components in the scope of the present invention to achieve the purpose, and may selectively include one or more additives when necessary. As useful additives, water repellents to increase the water resistance of fibrous assembly, anti-rust additive to inhibit the rusting of facilities, dust oil to decrease the formation of dust in products, buffer to control the pH or coupling additive to enhance the adhesion may be used. However, the additives are not limited thereto, and any additive widely used in this field may be used as well. There are no particular limitations on additional additives, based on a total of 100 parts by weight of reducing sugar and amino acid, and each additive may be used in a range of 0.1∼10 parts by weight, but it is not limited thereto.

The binder composition of the present invention may control the solid content as 2∼50% by weight, preferably 5∼20% by weight (in other words, based on the whole 100% by weight of the composition, the content of water is 50∼98% by weight, preferably 80∼95% by weight) by using diluents such as water (industrial water, underground water, waste water etc.) to evenly apply the above components on the fibrous materials. When there is too much water as a diluent, excessive energy may be consumed to volatile water, but when there is too little water, the binder composition may be not applied well on the fibrous materials, and therefore binder content in the final product is unnecessarily high which is not desirable.

When the binder composition of the present invention is heat-treated (for example, at a temperature of 120°C or higher), various curing reactions-such as Maillard reaction which occurs at amadori intermediate between aldehyde group of reducing sugar and amine group of amino acid, amide reaction between carboxylic acid group and amine group of the amino acid, ester reaction between hydroxyl group of reducing sugar and carboxylic acid group of amino acid, curing reaction between glycidyl group and hydroxyl group, glycidyl group and carboxyl group, or glycidyl group and amino group-can occur and as a result water-insoluble polymer is formed, which makes it a useful adhesive with highly outstanding physical properties such as water resistance.

Therefore, in another aspect, the present invention provides a binding method comprising spraying an aqueous heat-curable binder composition on fibrous materials; and heat-curing the sprayed binder composition, and also provides fibrous materials bound by the aqueous heat-curable binder composition of the present invention.

According to the method for binding fibrous materials of the present invention, the above aqueous heat-curable binder composition is sprayed on the fibrous materials in the form of an uncured solution or an aqueous dispersion. Filament assemblies such as mineral fiber (for example, rock wool, glass wool, ceramic fiber etc.) or fiber obtained from natural and synthetic resins may be concrete examples of the above fibrous materials, but are not limited thereto.

Moreover, the fibrous material assembly wherein the binder composition is applied is heat-cured through heat-treatment. The heat-treatment temperature for curing is appropriate at 120°C or higher (for example, 120∼300°C, preferably 150∼250°C). When the heat treatment temperature is too low, insufficient curing occurs, but when it is too high, over-curing occurs which might lead to problems related to formation of dust.

The cured binder content in fibrous materials manufactured by the present invention may be based on 100 parts by weight of bound fibrous materials-for example, 2 to 15% by weight.

### [Best Mode]

Hereinafter, the present invention will be described in more detail with reference to the following examples, but the scope of the present invention should not be construed to be limited thereby in any manner. The scope of the present invention is limited by the attached claims.

### [Examples]

### Example 1

376kg of glucose (D-glucose) (solid content: 91% by weight), 58kg of glutamic acid (solid content: 98% by weight), 2.4kg of glycerin triglycidyl ether (JSI Company, EJ-300, solid content: 99% by weight, water tolerance: 75% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 2

376kg of glucose (D-glucose) (solid content: 91% by weight), 54kg of L-asparagine (solid content: 98% by weight), 5kg of sulfuric acid (98%), 2.4kg of glycerin triglycidyl ether (JSI Company, EJ-300, solid content: 99% by weight, water tolerance: 70% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 3

376kg of glucose (D-glucose) (solid content: 91% by weight), 116kg of liquid L-lysine (solid content: 50% by weight), 5kg of sulfuric acid (98%), 2.4kg of glycerin triglycidyl ether (JSI Company, EJ-300, solid content: 99% by weight, water tolerance: 70% by weight), 3kg of dust oil (Govi-Garo217S), 2kg of silicone water repellent (silicone-based water repellent) (KCC-SI1460Z) and 3980kg of distilled water were put into a mixing vessel, and a binder was prepared by stirring the vessel for 30 minutes with an agitator. The solid content of the obtained binder was 9% by weight.

### Example 4

329kg of glucose (D-glucose) (solid content: 91% by weight), 102kg of solid state L-lysine neutralized with sulfuric acid (solid content: 98% by weight), 2.4kg of glycerin triglycidyl ether (JSI Company, EJ-300, solid content: 99% by weight, water tolerance: 70% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 5

376kg of glucose (D-glucose) (solid content: 91% by weight), 54kg of L-argininine (solid content: 98% by weight), 2.4kg of glycerin triglycidyl ether (JSI Company, EJ-300, solid content: 99% by weight, water tolerance: 70% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 6

376kg of glucose (D-glucose) (solid content: 91% by weight), 58kg of glutamine (solid content: 98% by weight), 5kg of sulfuric acid (98%), 2.4kg of glycerin triglycidyl ether (JSI Company, EJ-300, solid content: 99% by weight, water tolerance: 70% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 7

376kg of glucose (D-glucose) (solid content: 91% by weight), 58kg of glutamine (solid content: 98% by weight), 5kg of sulfuric acid (98%), 2.4kg of sorbitol tetraglycidyl ether (JSI Company, EJ-190, solid content: 99% by weight, water tolerance: 78% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 8

376kg of glucose (D-glucose) (solid content: 91% by weight), 58kg of glutamine (solid content: 98% by weight), 5kg of sulfuric acid (98%), 2.4kg of ethylene glycol diglycidyl ether (JSI Company, EJ-1030, solid content: 99% by weight, water tolerance: 100% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 9

376kg of glucose (D-glucose) (solid content: 91% by weight), 58kg of glutamine (solid content: 98% by weight), 5kg of sulfuric acid (98%), 2.4kg of trimethylol propane triglycidyl ether (Nagase ChemteX Company, EX-321, solid content: 99% by weight, water tolerance: 27% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Example 10

376kg of glucose (D-glucose) (solid content: 91% by weight), 58kg of glutamine (solid content: 98% by weight), 5kg p-toluenesulfonic acid (pTSA, 98%), 2.4kg of glycerine triglycidyl ether (JSI Company, EJ-190, solid content: 99% by weight, water tolerance: 78% by weight), 3kg of dust oil (Govi-Garo217S), 2kg of silicone water repellent (silicone-based water repellent) (KCC-SI1460Z) and 4050kg of distilled water were put into a mixing vessel, and a binder was prepared by stirring the vessel for 30 minutes with an agitator. The solid content of the obtained binder was 9% by weight.

### Comparative Example 1: Preparing binder by using phenol/formaldehyde resin

404kg of phenol/formaldehyde resin (manufactured by KCC), 3800kg of distilled water, 2kg of water repellent (KCC-SI1460Z) and 3kg of dust oil (Garo217S) were put into a mixing vessel, and a binder was prepared by stirring the vessel for 30 minutes with an agitator. The solid content of the obtained binder was 9% by weight.

### Comparative Example 2: Preparing binder by using polycarboxylic acid (Example 1 of Korean) Laid-open Patent Publication No. 2008-0049012

158kg of glucose (D-glucose) (solid content: 91% by weight), 44kg of citric acid (solid content: 98% by weight), 50kg of ammonia water (25%), 3800kg of distilled water, 2kg of water repellent (KCC-SI1460Z) and 3kg of dust oil (Garo217S) were put into a mixing vessel, and a binder was prepared by stirring the vessel for 30 minutes with an agitator. The solid content of the obtained binder was 5.0% by weight.

### Comparative Example 3: Preparing binder by using epoxy emulsion resin

376kg of glucose (D-glucose) (solid content: 91% by weight), 58kg of glutamine (solid content: 98% by weight), 3.4kg of epoxy emulsion resin (KBM-128-70, Kukdo Chemical, solid content: 70% by weight), 3kg of dust oil (Govi-Garo217S), 2kg of silicone water repellent (silicone-based water repellent) (KCC-SI1460Z) and 4049kg of distilled water were put into a mixing vessel, and a binder was prepared by stirring the vessel for 30 minutes with an agitator. The solid content of the obtained binder was 9% by weight.

### Comparative Example 4: Preparing binder by using nonreducing sugars

570kg of sucrose (solid content: 60% by weight), 58kg of glutamine (solid content: 98% by weight), 5kg of sulfuric acid (98%), 2.4kg of glycerin triglycidyl ether (JSI Company, EJ-300), 3kg of dust oil (Govi-Garo217S), 2kg of silicone water repellent (silicone-based water repellent) (KCC-SI1460Z) and 3850kg of distilled water were put into a mixing vessel, and a binder was prepared by stirring the vessel for 30 minutes with an agitator. The solid content of the obtained binder was 9% by weight.

### Comparative Example 5: Preparing binder by using nonreducing sugars

345kg of maltodextrin (solid content: 99% by weight), 58kg of glutamine (solid content: 98% by weight), 5kg of sulfuric acid(98%), 2.4kg of glycerin triglycidyl ether (JSI Company, EJ-300), 3kg of dust oil (Govi-Garo217S), 2kg of silicone water repellent (silicone-based water repellent) (KCC-SI1460Z) and 4070kg of distilled water were put into a mixing vessel, and a binder was prepared by stirring the vessel for 30 minutes with an agitator. The solid content of the obtained binder was 9% by weight.

### Experimental Example: Binding fibrous materials using binders

Melted glass of high temperature was fiberized at a rate of 2100 kg/hr by passing through a spinner, and each binder, prepared in the above Examples 1 to 10 and Comparative Examples 1, 2, 4 and 5 was respectively sprayed at the rate of 47L/min on the glass fiber which came to the collecting vessel. After the drying process, a glass wool insulator was obtained. In case of the binder of Comparative Example 3, spraying application was not possible since flocculated particle was formed.

The below tests were done to each of the glass wools prepared.

### Water Resistance

A glass wool sample of 100mm (width)×100mm (height)×50mm (thickness) was prepared, and water resistance was tested for the standardized 48 hours. The sample was floated in pure water in the beaker, and the time consumed for the sample to completely sink down was measured. The poorer the water resistance was, the closer it was graded to 0, and the more it was outstanding, the closer it was graded to 5. The test results are shown in Table 1 and Table 2 below.

### Immersion

A glass wool sample of 100mm (width)×100mm (height)×50mm (thickness) was prepared, and immersion was tested for the standardized 72 hours. The sample was fully immersed in a 2L beaker completely filled with pure water, and the change in the color was measured. The change in the color was numerically digitized by the color change, depending on the concentration. The poorer the submersion was, the closer it was graded to 0, and the more it was outstanding, the closer it was graded to 5. The test results are shown in Table 1 and Table 2 below.

### Amount of Formaldehyde Released

By the small chamber method, a specimen was put into a small chamber, and the air inside the chamber was collected after 7 days. The collected air was examined by HPLC (high performance liquid chromatography). More detailed method follows the method set by the Korea Air Cleaning Association (KS M ISO 16000, KS M 1998), and the results were analyzed on the 7^{th} day. The test results are shown in Table 1 and Table 2 below.

### Tensile Strength

All 3 of the measuring samples were prepared in a size of 4cm. The draw bar was placed shorter than the length of the sample, and the sample was fixed on the draw bar perpendicularly, making the sample perpendicular to the rod. The speed of the tensile strength tester was 15mm/min, and the scale was set to zero in the rod display. The tester was then operated. The maximum load displayed after the tester automatically stopped was measured, and the average value was calculated. The test results are shown in Table 1 and Table 2.

### Dust Rate

Four measuring samples were prepared, each of them 1.5cm wide and 10cm long. The sample was weighed before measuring, placed on the rust rate measuring meter, and the sample was shaken in every direction at a rate of 1m/min. The total measuring time was 10 minutes for each sample, and when the tester was automatically stopped, the sample was weighed. The dust rate was represented in percent and calculated by the following formula: dust rate = [(weight after the measurement / weight before the measurement) - 1]×100. The test results are shown in Table 1.

### Restoration Rate

A glass wool sample of 10m (width)×1m (height)×0.05m (thickness) was prepared and kept at room temperature in a rolled form for 8 weeks. After 8 weeks, the change of thickness of the sample was examined after being unrolled. The test results are shown in Table 1 and Table 2 below.

### Mold Resistance

The mold resistance was measured by the ASTM G21-09 test method, and the mold growth rate of the specimen was measured after a one-month observation. The results are shown in Table 1 and Table 2 below.

**[Table 1]**

| | Experiments | | | | | | | | | |
|---|---|---|---|---|---|---|---|---|---|---|
| | 1 | 2 | 3 | 4 | 5 | 6 | 7 | 8 | 9 | 10 |
| Water Resistance | 4 | 5 | 5 | 4 | 5 | 5 | 5 | 5 | 5 | 4 |
| Immersion | 4 | 5 | 5 | 5 | 5 | 5 | 5 | 5 | 5 | 4 |
| Amount of Formaldehyde Released | 0 | 0 | 0 | 0 | 0 | 0 | 0 | 0 | 0 | 0 |
| Tensile Strength (kgf/cm²) | 0.2 | 0.3 | 0.25 | 0.2 | 0.23 | 0.25 | 0.25 | 0.25 | 0.3 | 0.2 |
| Dust Rate (%) | 0.6% | 0.5% | 0.6% | 0.6% | 0.5% | 0.5% | 0.5% | 0.5% | 0.5% | 0.7% |
| Restoration Rate (%) | 100% or more | 100% or more | 100% or more | 100% or more | 100% or more | 100% or more | 100% or more | 100% or more | 100% or more | 100% or more |
| Mold Resistance | Good | Good | Good | Good | Good | Good | Good | Good | Good | Good |

**[Table 2]**

| | Comparative Examples | | | | |
|---|---|---|---|---|---|
| | 1 | 2 | 3 | 4 | 5 |
| Water Resistance | 5 | 4 | n/a | 2 | 2 |
| Immersion | 4 | 4 | n/a | 2 | 3 |
| Amount of Formaldehyde Released | 0.035 | 0 | n/a | 0 | 0 |
| Tensile Strength (kgf/cm²) | 0.25 | 0.2 | n/a | 0.11 | 0.12 |
| Dust Rate (%) | 0.5% | 1.8% | n/a | 1.8% | 1.5% |
| Restoration Rate (%) | 100% or more | 100% or more | n/a | 100% or more | 100% or more |
| Mold Resistance | Good | Good | n/a | Good | Good |

## Claims

1. An aqueous heat-curable binder composition for binding fibrous material comprising:
40∼95 parts by weight of one or more reducing sugars;
5∼60 parts by weight of one or more amino acids; and
0.1∼10 parts by weight of one or more polyglycidyl ether compounds of polyhydric alcohol, based on a total 100 parts by weight of reducing sugar and amino acid,
wherein the aqueous heat-curable binder composition is curable at a temperature of 120°C or higher.

2. The aqueous heat-curable binder composition for binding fibrous material according to claim 1, wherein the reducing sugar is selected from glucose, maltose, fructose, galactose, lactose, cellobiose, gentiobiose, rutinose and combinations thereof.

3. The aqueous heat-curable binder composition for binding fibrous material according to any one of claim 1 or claim 2, wherein the amino acid is selected from glycine, alanine, valine, leucine, isoleucine, threonine, serine, cysteine, methionine, aspartic acid, asparagine, glutamic acid, diodine tyrosine, lysine, arginine, histidine, phenylalanine, tyrosine, tryptophan, proline, oxyproline, glutamine and combinations thereof.

4. The aqueous heat-curable binder composition for binding fibrous material according to any one of claims 1 to 3, wherein 20∼100% equivalent of amino group in the amino acid is neutralized by acid.

5. The aqueous heat-curable binder composition for binding fibrous material according to any one of claims 1 to 4, wherein the water tolerance of the polyglycidyl ether compound of polyhydric alcohol is 25% or more by weight, wherein the water tolerance refers to weight % of water to epoxy compound for maintaining a homogenous solution without phase separation when water is dissolved to the epoxy compound in room temperature, normal pressure.

6. The aqueous heat-curable binder composition for binding fibrous material according to any one of claims 1 to 5, wherein the polyglycidyl ether compound of the polyhydric alcohol is one or more selected from the group consisting of glycerin polyglycidyl ether, ethylene glycol diglycidyl ether, diethylene glycol diglycidyl ether, polyethylene glycol diglycidyl ether, polypropylene glycol diglycidyl ether, trimethylolpropane polyglycidyl ether and sorbitol polyglycidyl ether.

7. The aqueous heat-curable binder composition for binding fibrous material according to any one of claims 1 to 6, further comprising acid compound which has a boiling point higher than 300°C under room temperature and normal pressure condition.

8. A method for binding fibrous materials, comprising:
spraying the aqueous heat-curable binder composition for binding fibrous material according to any of claims 1 to 7 on fibrous materials; and
heat-curing the binder composition at a temperature of 120°C or higher.

9. The fibrous materials bound by using the aqueous heat-curable binder composition for binding fibrous material according to any of claims 1 to 7.

## Patentansprüche

1. Eine wässrige, wärmehärtende Binderzusammensetzung zum Binden von Fasermaterialien, die umfasst:
40 - 95 Gewichtsteile eines oder mehrerer reduzierender Zucker;
5 - 60 Gewichtsteile einer oder mehrerer Aminosäuren; und
0.1 - 10 Gewichtsteile einer oder mehrerer Polyglycidyletherverbindungen mehrwertigen Alkohols, auf Basis einer Gesamtmenge von 100 Gewichtsteilen reduzierendem Zucker und Aminosäure,
wobei die wässrige, wärmehärtende Binderzusammensetzung bei einer Temperatur von 120°C oder höher härtet.

2. Die wässrige, wärmehärtende Binderzusammensetzung zum Binden von Fasermaterialien nach Anspruch 1, wobei der reduzierende Zucker ausgewählt wird aus Glucose, Maltose, Fructose, Galactose, Lactose, Cellobiose, Gentiobiose, Rutinose und Kombinationen daraus.

3. Wässrige, wärmehärtende Binderzusammensetzung zum Binden von Fasermaterialien nach irgendeinem der Ansprüche 1 oder 2, wobei die Aminosäure ausgewählt wird aus Glyzin, Alanin, Valin, Leucin, Isoleucin, Threonin, Serin, Cystein, Methionin, Asparaginsäure, Asparagin, Glutaminsäure, Diodin- Tyrosin, Lysin, Arginin, Histidin, Phenylalanin, Tyrosin, Tryptophan, Prolin, Oxyprolin, Glutamin und Kombinationen daraus.

4. Wässrige, wärmehärtende Binderzusammensetzung zum Binden von Fasermaterialien nach irgendeinem der Ansprüche 1 bis 3, wobei 20- 100% Äquivalent der Aminogruppe in der Aminosäure durch Säure neutralisiert wird.

5. Wässrige wärmehärtende Binderzusammensetzung zum Binden von Fasermaterialien nach irgendeinem der Ansprüche 1 bis 4, wobei die Wasserverträglichkeit der Polyglycidyletherverbindungen mehrwertigen Alkohols 25% oder mehr nach Gewicht beträgt, wobei die Wasserverträglichkeit sich auf Gewichts-% Wasser zu Epoxy- Verbindung bezieht, um eine homogene Lösung aufrechtzuerhalten, ohne Phasentrennung, wenn Wasser bei Raumtemperatur und normalem Druck zur Epoxy- Verbindung gegeben wird.

6. Wässrige wärmehärtende Binderzusammensetzung zum Binden von Fasermaterialien nach irgendeinem der Ansprüche 1 bis 5, wobei es sich bei der Polyglycidyletherverbindung des mehrwertigen Alkohols um eine oder mehrere handeln kann, die ausgewählt werden aus der Gruppe bestehend aus Glycerin-Polyglycidylether, Ethylenglycoldiglycidylether, Diethylen- Glycoldiglycidylether, Polyethylenglycoldiglycidylether, Polypropylenglycol- Diglycidylether, Trimethylolpropan- Polyglycidylether und Sorbitol- Polyglycidylether.

7. Wässrige, wärmehärtende Binderzusammensetzung zum Binden von Fasermaterialien nach irgendeinem der Ansprüche 1 bis 6, weiterhin eine Säureverbindung mit einem Siedepunkt von über 300° C bei Raumtemperatur und normalen Druckbedingungen enthaltend.

8. Verfahren zum Binden von Fasermaterialien, das umfasst:
Aufsprühen der wässrigen, wärmehärtenden Binderzusammensetzung zum Binden von Fasermaterialien nach irgendeinem der Ansprüche 1 bis 7 auf Fasermaterial; und
Wärmehärten der Binderzusammensetzung bei einer Temperatur von 120°C oder höher.

9. Fasermaterialien, die unter Verwendung der wässrigen wärmehärtenden Binderzusammensetzung zum Binden von Fasermaterialiennach nach irgendeinem der Ansprüche 1 bis 7 gebunden werden.

## Revendications

1. Composition aqueuse de liant thermodurcissable pour lier un matériau fibreux, comprenant :
40 à 95 parties en poids d'un ou plusieurs sucres réducteurs ;
5 à 60 parties en poids d'un ou plusieurs acides aminés ; et
0,1 à 10 parties en poids d'un ou plusieurs composés d'éther polyglycidylique d'alcool polyhydrique, sur la base d'un total de 100 parties en poids de sucre réducteur et d'acide aminé,
dans laquelle la composition de liant thermodurcissable aqueuse est durcissable à une température de 120°C ou plus.

2. Composition aqueuse de liant thermodurcissable pour lier un matériau fibreux selon la revendication 1, dans laquelle le sucre réducteur est choisi parmi le glucose, le maltose, le fructose, le galactose, le lactose, le cellobiose, le gentiobiose, le rutinose et des combinaisons de ceux-ci.

3. Composition aqueuse de liant thermodurcissable pour lier un matériau fibreux selon l'une quelconque des revendications 1 ou 2, dans laquelle l'acide aminé est choisi parmi la glycine, l'alanine, la valine, la leucine, l'isoleucine, la thréonine, la sérine, la cystéine, la méthionine, l'acide aspartique, l'asparagine, l'acide glutamique, la diodine tyrosine, la lysine, l'arginine, l'histidine, la phénylalanine, la tyrosine, le tryptophane, la proline, l'oxyproline, la glutamine et des combinaisons de ceux-ci.

4. Composition aqueuse de liant thermodurcissable pour lier un matériau fibreux selon l'une quelconque des revendications 1 à 3, dans laquelle 20 à 100 % d'équivalent de groupe amino dans l'acide aminé sont neutralisés par un acide.

5. Composition aqueuse de liant thermodurcissable pour lier un matériau fibreux selon l'une quelconque des revendications 1 à 4, dans laquelle la tolérance à l'eau du composé d'éther polyglycidylique d'alcool polyhydrique est de 25 % en poids ou plus, dans laquelle la tolérance à l'eau fait référence à un pourcentage en poids d'eau par rapport au composé époxy pour maintenir une solution homogène sans séparation de phase lorsque de l'eau est dissoute par rapport au composé époxy à température ambiante et à pression normale.

6. Composition aqueuse de liant thermodurcissable pour lier un matériau fibreux selon l'une quelconque des revendications 1 à 5, dans laquelle le composé d'éther polyglycidylique de l'alcool polyhydrique est un ou plusieurs choisis dans le groupe constitué par l'éther polyglycidylique de glycérine, l'éther diglycidylique d'éthylène glycol, l'éther diglycidylique de diéthylène glycol, l'éther diglycidylique de polyéthylène glycol, l'éther diglycidylique de polypropylène glycol, l'éther polyglycidylique de triméthylolpropane et l'éther polyglycidylique de sorbitol.

7. Composition aqueuse de liant thermodurcissable pour lier un matériau fibreux selon l'une quelconque des revendications 1 à 6, comprenant en outre un composé acide qui a un point d'ébullition supérieur à 300°C dans des conditions de température ambiante et de pression normale.

8. Procédé de liaison de matériaux fibreux, comprenant :
pulvériser la composition aqueuse de liant thermodurcissable pour lier un matériau fibreux selon l'une quelconque des revendications 1 à 7 sur des matériaux fibreux ; et
thermodurcir la composition de liant à une température de 120°C ou plus.

9. Matériaux fibreux liés en utilisant la composition aqueuse de liant thermodurcissable pour lier un matériau fibreux selon l'une quelconque des revendications 1 à 7.
